# EUROPEAN PATENT APPLICATION

(11) **EP 4 852 584 A1**
(43) Date of publication of application: **09.12.2026**
(21) Application number: 24921453.7
(22) Date of filing: 20.09.2024
(51) Int. Cl.: H04W 72/231

(54) **COMMUNICATION METHOD AND APPARATUS, AND STORAGE MEDIUM**

(30) Priority: 04.02.2024 CN 202410166168
(71) Applicant: ZTE Corporation, Shenzhen, Guangdong 518057 (CN)
(72) Inventor: TAN, Jie, Shenzhen, Guangdong 518057 (CN); LU, Ting, Shenzhen, Guangdong 518057 (CN); SHA, Xiubin, Shenzhen, Guangdong 518057 (CN); GAO, Yuan, Shenzhen, Guangdong 518057 (CN); NIU, Li, Shenzhen, Guangdong 518057 (CN)
(74) Representative: Ziebig Hengelhaupt Intellectual Property Attorneys Patentanwaltskanzlei PartGmbB
(86) International application number: PCT/CN2024/120110
(87) International publication number: WO 2025/161429

(57) **Abstract**

The present disclosure relates to the technical field of communications, and in particular to a communication method and apparatus and a storage medium, for use in effectively supporting information reporting by terminals in the environment Internet of Things. The method comprises: receiving first information sent by a base station, wherein the first information is used for indicating an operation command, and sending second information to the base station, wherein the second information is used for indicating an execution result of the operation command.

## Description

The present disclosure claims priority to the Chinese Patent Application No. 202410166168.3, filed on February 4, 2024, the entire content of which is incorporated herein by reference.

### TECHNICAL FIELD

The present disclosure relates to the technical field of communications, and in particular, to a communication method and apparatus, and a storage medium.

### BACKGROUND

With the development of Internet of Things (IoT) technologies, application scenarios such as environmental monitoring and large-scale warehousing impose requirements for smaller size, lower complexity, and lower power consumption, etc., on IoT terminals.

To this end, the ambient IoT (AIoT) technology has begun to develop, and it proposes that a terminal with weaker performance may be connected to an IoT network. The terminal with weaker performance may include a terminal that does not have energy storage and/or radio frequency signal generation capabilities.

### SUMMARY

Embodiments of the present disclosure provide a communication method and apparatus, and a storage medium.

In an aspect, a communication method is provided, applied to a terminal, and includes:
receiving first information sent from a base station, where the first information is used to indicate an operation command; and
sending second information to the base station, where the second information is used to indicate an execution result of the operation command.

In another aspect, a communication method is provided, applied to a base station, and includes:
sending first information to a terminal, where the first information is used to indicate an operation command; and
receiving second information sent from the terminal, where the second information is used to indicate an execution result of the operation command.

In yet another aspect, a communication apparatus is provided, and includes: a receiving module and a sending module;
the receiving module is configured to receive first information sent from a base station, where the first information is used to indicate an operation command; and
the sending module is configured to send second information to the base station, where the second information is used to indicate an execution result of the operation command.

In yet another aspect, a communication apparatus is provided, and includes: a sending module and a receiving module;
the sending module is configured to send first information to a terminal, where the first information is used to indicate an operation command; and
the receiving module is configured to receive second information sent from the terminal, where the second information is used to indicate an execution result of the operation command.

In yet another aspect, a communication apparatus is provided, and includes: a memory and a processor; the memory and the processor are coupled; the memory is configured to store instructions executable by the processor; the processor, upon executing the instructions, implements the communication method described in any one of the above aspects or embodiments.

In yet another aspect, a computer-readable storage medium is provided, where computer instructions are stored on the computer-readable storage medium, and the computer instructions, upon running on a computer, enable the computer to implement the communication method described in any one of the above aspects or embodiments.

In yet another aspect, a computer program product is provided, where the computer program product includes computer program instructions, and the computer program instructions, upon being executed by a processor, implement the communication method described in any one of the above aspects or embodiments.

In the embodiments of the present disclosure, a terminal may receive first information sent from a base station. The first information is used to indicate an operation command. Therefore, the terminal may, according to the indication of the first information, execute a corresponding operation command to obtain an execution result, so as to accurately identify information that needs to be reported to the base station. Further, the terminal may send second information to the base station, to indicate the execution result of the operation command to the base station, thereby sending the information that needs to be reported to the base station.

### BRIEF DESCRIPTION OF THE DRAWINGS

In order to more clearly illustrate the technical solutions in the present disclosure, the drawings required to be used in some embodiments of the present disclosure will be briefly introduced below. Apparently, the drawings described below are only drawings of some embodiments of the present disclosure, and for those ordinary skilled in the art, other drawings may also be obtained based on these drawings.
FIG. 1 is a schematic structural diagram of a communication system provided in some embodiments of the present disclosure.
FIG. 2 is a schematic flowchart of a communication method provided in some embodiments of the present disclosure.
FIG. 3 is a schematic flowchart of another communication method provided in some embodiments of the present disclosure.
FIG. 4 is a schematic flowchart of yet another communication method provided in some embodiments of the present disclosure.
FIG. 5 is a schematic flowchart of yet another communication method provided in some embodiments of the present disclosure.
FIG. 6 is a schematic flowchart of yet another communication method provided in some embodiments of the present disclosure.
FIG. 7 is a schematic flowchart of yet another communication method provided in some embodiments of the present disclosure.
FIG. 8 is a schematic flowchart of yet another communication method provided in some embodiments of the present disclosure.
FIG. 9 is a schematic flowchart of yet another communication method provided in some embodiments of the present disclosure.
FIG. 10 is a schematic flowchart of yet another communication method provided in some embodiments of the present disclosure.
FIG. 11 is a schematic flowchart of yet another communication method provided in some embodiments of the present disclosure.
FIG. 12 is a schematic structural diagram of a communication apparatus provided in some embodiments of the present disclosure.
FIG. 13 is a schematic structural diagram of another communication apparatus provided in some embodiments of the present disclosure.
FIG. 14 is a schematic structural diagram of yet another communication apparatus provided in some embodiments of the present disclosure.

### DETAILED DESCRIPTION

The technical solutions in the present disclosure will be clearly and completely described below in conjunction with the drawings in the present disclosure. Apparently, the described embodiments are only a part of the embodiments of the present disclosure, rather than all of the embodiments. Based on the embodiments in the present disclosure, all other embodiments obtained by those ordinary skilled in the art without making creative efforts fall within the protection scope of the present disclosure.

It should be noted that, in the present disclosure, words such as "exemplarily" or "for example/such as/e.g." are used to indicate examples, illustrations, or explanations. Any embodiment or design solution described with "exemplarily" or "for example/such as/e.g." in the present disclosure should not be interpreted as being more preferred or more advantageous than other embodiments or design solutions. Specifically, the use of words such as "exemplarily" or "for example/such as/e.g." is intended to present related concepts in an exemplary manner.

Hereinafter, the terms "first", "second", etc., are used for descriptive purposes only, and should not be understood as indicating or implying relative importance or implicitly specifying the number of the indicated technical features. Thus, features defined with "first", "second", etc., may explicitly or implicitly include one or more of such features.

In the description of the present disclosure, unless otherwise specified, "/" means "or", for example, A/B may represent A or B. Herein, "and/or" is only a description of the association relationship of associated objects, indicating that three relationships may exist. For example, A and/or B may represent: only A, only B, and both A and B. In addition, "at least one" means one or more, and "a plurality of/multiple" means two or more.

With the development of IoT technologies, application scenarios such as environmental monitoring and large-scale warehousing impose requirements for smaller size, lower complexity, and lower power consumption, etc., on IoT devices.

To this end, the AIoT technology has begun to develop. In a wireless sensor network applying the AIoT technology, IoT devices may adapt to the environment through sensors, data analysis, and connectivity, and have characteristics such as low cost and self-powering. Such IoT devices applying the AIoT technology may also be referred to as AIoT devices, AIoT terminals, etc.

The wireless sensor network applying the AIoT technology may be classified into four topological structures.

In a first topological structure, a base station (BS) and an AIoT terminal directly perform bidirectional communication. Communication content between the base station and the AIoT terminal may include ambient IoT data and/or signaling. In this topological structure, a base station that sends information to the AIoT terminal may be different from a base station that receives information from the AIoT terminal.

In a second topological structure, a base station and an AIoT terminal establish a communication connection via a relay node. The AIoT terminal may bidirectionally communicate with the relay node. The relay node is used to transmit ambient IoT data and/or signaling between the base station and the AIoT terminal. In this topological structure, the relay node may be a relay, an integrated access and backhaul (IAB) node, a user equipment (UE), or a repeater, etc., used to support ambient IoT operations. The relay node may also be referred to as an intermediate node, etc.

In a third topological structure, a base station and an AIoT terminal establish a communication connection via an assisting node. For example, the AIoT terminal may send data or signaling to the base station, and receive signaling or data from the assisting node. For another example, the AIoT terminal may receive data or signaling from the base station, and send signaling or data to the assisting node. In this topological structure, the assisting node may be a relay, an IAB node, a UE, or a repeater, etc., used to support ambient IoT operations.

In a fourth topological structure, an AIoT terminal performs bidirectional communication with a UE. Communication content between the AIoT terminal and the UE may include ambient IoT data and/or signaling.

From the perspective of deployment scenarios, the wireless sensor network applying the AIoT technology may be deployed in a way such as indoor device + indoor base station, indoor device + outdoor base station, indoor device + UE, outdoor device + outdoor base station, and outdoor device + UE, etc. The indoor device and the outdoor device are AIoT terminals. The base station and the UE are used to provide reader/writer functions.

According to the energy storage capability of the AIoT terminal and the capability to generate a radio frequency signal for its transmission, the AIoT terminal may be classified into three types. A first type of terminal does not have an energy storage capability and does not have a capability to independently generate a radio frequency signal. A second type of terminal has an energy storage capability and does not have a capability to independently generate a radio frequency signal, and its stored energy may be used to amplify a reflected signal. A third type of terminal has an energy storage capability and has a capability to independently generate a radio frequency signal.

Considering that some AIoT terminals (such as the first type of terminal and the second type of terminal) have weaker performance, communication methods in related technologies may have difficulty effectively supporting AIoT terminals in receiving and sending information. These terminals with weaker performance often cannot report information collected or monitored from the environment. Therefore, it is necessary to explore effective methods to support information interaction in the ambient IoT.

In order to effectively support the terminal in the ambient IoT in reporting information, the embodiments of the present disclosure provide a communication method, where a terminal may receive first information sent from a base station. The first information is used to indicate an operation command. Therefore, the terminal may, according to the indication of the first information, execute the corresponding operation command to obtain an execution result, so as to accurately identify information that needs to be reported to the base station. Further, the terminal may send second information to the base station, to indicate the execution result of the operation command to the base station, thereby sending the information that needs to be reported to the base station.

Based on this, in a case where a terminal (i.e., device) in the ambient IoT has weak performance and finds it difficult to actively report relevant information in the environment, the present disclosure may support the terminal in executing the corresponding operation to obtain relevant information in the environment, and further reporting the relevant information to the base station, under the guidance of a base station.

In some embodiments of the present disclosure, the communication method provided in the embodiments of the present disclosure may be applied to a terminal and a base station in a communication system. The communication system provided in the embodiments of the present disclosure is described below.

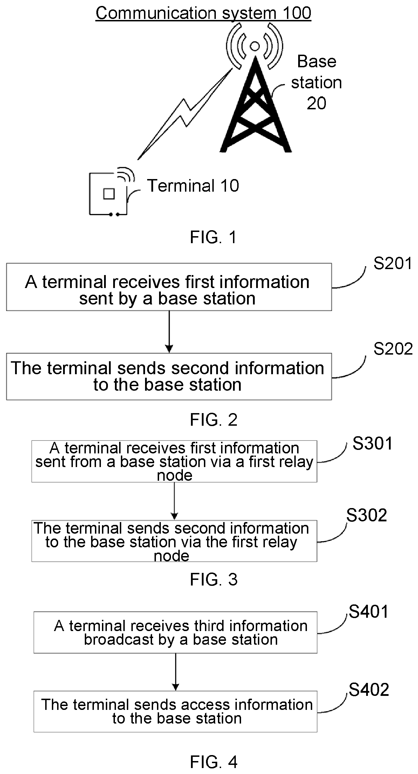

As shown in FIG. 1, it is a schematic structural diagram of a communication system 100 provided in the embodiments of the present disclosure. The communication system 100 in FIG. 1 may include a terminal 10 and a base station 20. The terminal 10 and the base station 20 may be communicatively connected.

The terminal 10 in FIG. 1 may be various devices in the ambient IoT. For example, the terminal 10 may be a sensor device such as a temperature sensor, a humidity sensor, or a light sensor, used to perform operations such as temperature collection or humidity collection. For another example, the terminal 10 may be an executor device such as a smart bulb, a smart socket, or an electronic lock, used to perform operations such as lighting and power on/off. For yet another example, the terminal 10 may be a monitoring device such as an air monitor, a water quality monitor, a noise monitor, or a video monitor. For yet another example, the terminal 10 may be an embedded device such as a smart television, a smart speaker, or a refrigerator. In some embodiments, the terminal 10 may also be referred to as an ambient IoT device, an AIoT terminal, a UE, etc.

In some embodiments, the terminal 10 may also be a wearable device such as a smart watch or a smart bracelet, may be a personal computer such as a tablet computer or a notebook computer, and may also be a remote terminal, a user terminal (terminal equipment, TE), a mobile device, etc. What is shown in FIG. 1 is an example of the device form of the terminal 10, which is not limited thereto.

The base station 20 in FIG. 1 may be a next generation base station (next generation node base station, gNB), a new radio base station (new radio eNB), a macro base station, a micro base station, a high-frequency base station, or a transmission and reception point (TRP), etc. What is shown in FIG. 1 is an example of the device form of the base station 20, which is not limited thereto.

It should be noted that the communication system 100 shown in FIG. 1 is only an example, and does not constitute a limitation on the system architecture to which the communication method provided in the embodiments of the present disclosure is applicable. For example, the communication system 100 may include more terminals 10. For another example, the communication system 100 may include more base stations 20.

Hereinafter, in conjunction with the communication system shown in FIG. 1, the communication method provided in the embodiments of the present disclosure is described. FIG. 2 is a schematic flowchart of a communication method provided in the embodiments of the present disclosure. The method shown in FIG. 2 may be applied to the terminal in the communication system shown in FIG. 1. As shown in FIG. 2, the communication method may include: S201 to S202.

In S201: a terminal receives first information sent from a base station.

The first information may be used to indicate an operation command.

In one possible manner, the first information includes at least one of: a type of the operation command, terminal identification information, check information, or a sequence number.

The type of the operation command may include at least one of: a read command, a query command, a write command, a parameter setting command, an inventory command, or a positioning command. The type of the operation command may also be indicated by a field of a signaling type of the first information.

The read command may be used to indicate the terminal to read stored data, for example, data such as temperature or electricity consumption collected by the terminal. The query command may be used to indicate the terminal to retrieve data meeting a condition from the stored data. The write command may be used to indicate the terminal to write specified data. The parameter setting command may be used to indicate the terminal to configure or modify a specified parameter. The inventory command may be used to indicate the terminal to inventory the stored data, as well as attribute information and configuration information of the terminal, etc. The positioning command may be used to indicate the terminal to report a current position of the terminal, etc.

The terminal identification information may be used to indicate a terminal that executes the operation command, and may include at least one of: a terminal type, group information, and a terminal identifier.

The terminal type may be used to indicate a capability type of the terminal. For example, the terminal type may be used to indicate a first type that does not have an energy storage capability and does not have a radio frequency signal generation capability, or may be used to indicate a second type that has an energy storage capability and does not have a radio frequency signal generation capability, or may also be used to indicate a third type that has an energy storage capability and has a radio frequency signal generation capability.

The group information may be a group identifier (identification, ID) of the terminal, and may be used to indicate a group to which the terminal belongs in a group transmission mode. The terminal identifier may be an ID of the terminal, used to uniquely identify the terminal.

The check information may be used to indicate a sequence number of the first information. The terminal may, based on the check information, generate reply check information in information that replies to the first information, so that the base station determines, based on the reply check information, the information from the terminal that replies to the first information. For example, a value of a check bit corresponding to the check information in the first information may be 1. The terminal may perform accumulation based on the check bit to generate reply check information with a value of 2.

The sequence number may be used for the terminal to confirm that the base station has received previous reply information or response information sent from the terminal, so as to avoid repeated transmission or out-of-order transmission of data, and to improve the integrity of data during the communication process.

In one possible manner, a plurality of terminals with the same function may be deployed generally in the ambient IoT, so as to acquire the same type of measurement data at different positions in the environment, or to perform the same type of action at different positions in the environment. For example, the plurality of terminals with the same function may be a plurality of temperature sensors or a plurality of water quality detectors, used to measure the temperature or water quality at different positions in the deployed environment. For another example, the plurality of terminals with the same function may be smart bulbs, used to perform a lighting action at different positions in the deployed environment. The processing capabilities of these terminals are often weak, and they may not have an energy storage capability, etc.

In order to facilitate these terminals in reporting relevant information in the environment, the base station may first send the first information for indication. Further, the terminal may perform corresponding processing based on energy of a signal carrying the first information. Moreover, in a case where these terminals are indicated to execute the operation command, the first information may include less content. For example, the first information may include the type of the operation command and the terminal type. Therefore, the terminal may perform simple parsing processing on the first information, so as to accurately identify an operation that needs to be executed, and further execute the corresponding operation to obtain an execution result. Based on this, a plurality of terminals with the same terminal type may, based on the indication of the first information, simultaneously execute the same operation and complete information reporting, thereby implementing efficient information interaction in the ambient IoT.

In one possible manner, in a case where the first information includes the type of the operation command and the terminal type, and the type of the operation command includes an inventory command, the first information may be used to indicate terminals with the terminal type to execute an inventory operation.

In a case where the first information includes the type of the operation command and the group information, and the type of the operation command includes an inventory command, the first information may be used to indicate terminals within a group corresponding to the group information to execute an inventory operation.

In a case where the first information includes the type of the operation command and the terminal identifier, and the type of the operation command includes an inventory command, the first information may be used to indicate a terminal corresponding to the terminal identifier to execute an inventory operation.

In one possible manner, the first information may be carried in at least one of: broadcast information, unicast information, downlink dedicated information, system information (system information block, SIB), media access control (MAC) control element (CE), downlink control information (DCI), or positioning information.

In one possible manner, while sending the first information, the base station may start a timer corresponding to the first information. If the timer expires (i.e., reaches the set time) and the base station has not received information from the terminal that replies to the first information, the base station may resend the first information to the terminal, so as to avoid the problem that the operation command cannot be executed due to the terminal not receiving the first information, thereby improving the stability of the communication system.

In S202: the terminal sends second information to the base station.

The second information may be used to indicate an execution result of the operation command.

In one possible manner, the second information includes at least one of: the execution result, check information, a terminal identifier, and information for indicating whether segmented transmission is performed.

The execution result may include information corresponding to the operation command, for example, read-related information corresponding to the read command, query-related information corresponding to the query command, information for indicating successful writing corresponding to the write command, information for indicating successful setting corresponding to the parameter setting command, inventory-related information corresponding to the inventory command, positioning-related information corresponding to the positioning command.

The check information may be generated by the terminal based on the check information in the first information, i.e., the reply check information in S201, and used for the base station to determine that the second information is information that replies to the first information.

In one possible manner, if the terminal does not perform segmented transmission, i.e., the second information is all information of the terminal's reply to the first information, the second information may include information for indicating that segmented transmission is not performed. If the terminal performs segmented transmission, i.e., the second information is a part of the information of the terminal's reply to the first information, the second information may include information for indicating that segmented transmission is performed.

In one possible manner, the second information is carried in at least one of: a media access control control element, uplink control information (UCI), uplink assistance information, response information, a measurement report, and uplink dedicated information.

In one possible manner, in a case where the terminal does not have a radio frequency signal generation capability, the terminal may send the second information for indicating the execution result to the base station, by reflecting the signal carrying the first information, thereby implementing reporting of the terminal information.

In the above embodiments of the present disclosure, the terminal may receive the first information sent from the base station. The first information is used to indicate an operation command. Therefore, the terminal may, according to the indication of the first information, execute the corresponding operation command to obtain an execution result, so as to accurately identify information that needs to be reported to the base station. Further, the terminal may send the second information to the base station, to indicate the execution result of the operation command to the base station, thereby sending the information that needs to be reported to the base station.

Based on this, in a case where a terminal (i.e., device) in the ambient IoT has weak performance and finds it difficult to actively report relevant information in the environment, the present disclosure may support the terminal in executing the corresponding operation to obtain the relevant information in the environment, and further reporting the relevant information to the base station, under the guidance of the base station, thereby effectively supporting the terminal in the ambient IoT in reporting information.

In an embodiment, as shown in FIG. 3, it is a schematic flowchart of another communication method provided in the embodiments of the present disclosure. In a case where a base station and an AIoT terminal are deployed in the second topological structure or the third topological structure, in order to implement the communication method in the above S201 to S202, FIG. 3 illustrates an example implementation, including: S301 to S302.

In S301: a terminal receives first information sent from a base station via a first relay node.

In one possible manner, the relay node may be a relay, an IAB node, a UE, or a repeater, etc., and may perform bidirectional communication with the terminal.

In S302: the terminal sends second information to the base station via the first relay node.

In one possible manner, in a case where the environment in which the terminal is deployed is an indoor environment, considering that a signal reaching the terminal from the base station may be weak, or a signal reflected by the terminal may have difficulty reaching the base station, information interaction between the terminal and the base station may be assisted by a relay node near the terminal, thereby implementing the downward delivery or upward reporting of information in the ambient IoT.

In one embodiment, as shown in FIG. 4, it is a schematic flowchart of yet another communication method provided in the embodiments of the present disclosure. In order to implement a communication connection between a base station and a low-performance terminal in the ambient IoT, the low-performance terminal may be activated by the base station. As shown in FIG. 4, the communication method provided in the embodiments of the present disclosure further includes: S401 to S402.

In S401: a terminal receives third information broadcast by a base station.

The third information may be used to activate the terminal.

In one possible manner, the third information may include at least one of: an operation command, a terminal type, a base station identifier, a cell identifier, a sequence number, check information, synchronization signal and physical broadcast channel (PBCH) block (synchronization signal and PBCH block, SSB) related information, initial bandwidth information, a downlink channel configuration, and a random access parameter.

The operation command in the third information may be a read command, a query command, a write command, a parameter setting command, an inventory command, or a positioning command, and may also be a command for indicating access to the base station, a command for activating a specified tag (Tag), a command for deactivating a specified tag, a command for indicating establishment of a communication connection, etc.

The terminal type in the third information may be used to indicate a function type of the terminal. For example, the terminal type may be used to indicate a sensor type, an executor type, an embedded type, or a monitoring type, etc. The terminal of the sensor type may be a temperature sensor, a humidity sensor, a light sensor, etc. The terminal of the executor type may be a smart bulb, a smart socket, an electronic lock, etc. The terminal of the embedded type may be a smart television, a smart speaker, a refrigerator, etc. The terminal of the monitoring type may be an air monitoring device, a water quality monitoring device, a noise monitoring device, a video monitoring device, etc.

In one possible manner, a terminal type may correspond to a type identifier, and type identifiers corresponding to different terminal types may be different. Moreover, the type identifier may be a simple string combination. The third information may indicate the terminal type that needs to be activated, by carrying the type identifier corresponding to the terminal type, so that the terminal identifies the terminal type through simple processing.

The base station identifier, i.e., the base station ID, is unique identification information of the base station, and may be composed of a plurality of pieces of identification information. The plurality of pieces of identification information may be an MCC (Mobile Country Code), an MNC (Mobile Network Code), a TAC (Tracking Area Code), a PLMN (Public Land Mobile Network) ID, an LAC (Location Area Code), and numbering information of the base station itself used to distinguish from other base stations, etc.; or any combination thereof.

The cell identifier, i.e., the cell ID, is used to uniquely identify a cell under the base station.

The sequence number in the third information may be used for the terminal to receive relevant information in sequence, so as to improve the integrity of data and avoid repeated transmission in the communication process.

The check information may be a check code of the third information, used to verify the integrity of the third information. For example, the check code may be odd parity check, even parity check, or cyclic redundancy check (CRC), etc.

The SSB related information may be initial SSB (i.e., primary synchronization signal) related information. System information block 1 broadcasts a symbol sequence of the initial SSB. The terminal may perform an initial cell search based on the symbol sequence.

The initial bandwidth information may be information of an initial bandwidth part (BWP). The BWP is a unit for allocating physical layer resources in the network, and is used to define a range of physical layer resources.

The downlink channel configuration is configuration information of a downlink channel, and may include a configuration parameter of a physical downlink control channel (PDCCH), a configuration parameter of a physical broadcast channel (PBCH), and configuration information of other downlink channels.

The random access parameter is a parameter in a random access process, for example, a random access code and a power level, etc.

In one possible manner, the third information may further include cell-specific information, and a system information index, etc. The cell-specific information may include cell-specific radio resource configuration information, cell barred information, etc. The system information index may include a broadcast system information index, used to indicate index positions and version information of other SIB messages, etc.

In one possible manner, a method for triggering the base station to broadcast the third information to activate the terminal may be at least one of: periodically triggering based on periodic information configured by an upper layer (or a higher layer), triggering based on an activation indication of an upper layer, triggering based on an event configured by an upper layer as a trigger condition, triggering based on a type indication of a terminal that needs to be activated, and triggering based on an operation that needs to be executed. The operation that needs to be executed is also a purpose of activation, such as reading, querying, writing, and parameter setting.

The upper layer may send these indication information via at least one of: predefined dedicated signaling for carrying the indication information, handover related information, path switch related information, UE context configuration release related information, paging related information, and position report related information, etc.

In S402: the terminal sends access information to the base station.

The access information may include at least one of: a preamble, a payload, a transmission gap, terminal related information, etc. The preamble may be used to perform data synchronization. The payload may be used to carry valid data. The transmission gap may support configuring a duration. The terminal related information may include an ID of the terminal, a sequence number of a tag, a type identifier, a date timestamp, a manufacturer ID, a terminal performance type (such as the above first type, second type, or third type), a physical layer identifier of the terminal, a group ID of the terminal, etc.

In one possible manner, in a case of receiving the third information broadcast by the base station, the terminal may send the access information to the base station. Correspondingly, the base station may receive the access information sent from the terminal, and further establish a connection with the terminal. Based on this, in the present disclosure, a connection may be established between the terminal and the base station in a manner similar to a two-step random access channel (RACH) procedure, to complete the activation.

In the above embodiments of the present disclosure, in a case where the terminal has weak performance and cannot actively establish a connection with the base station, the relevant information required for accessing the base station may be indicated to the terminal, by the base station broadcasting relevant information, so as to support the establishment of a communication connection between the terminal and the base station, thereby implementing information interaction in the ambient IoT and facilitating the upper layer in managing the terminal.

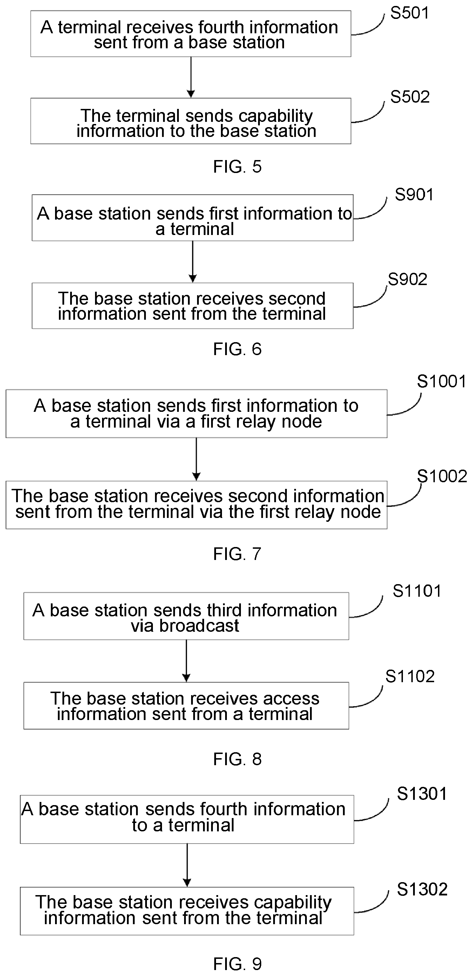

In a possible embodiment, FIG. 5 illustrates a schematic flowchart of yet another communication method provided in the embodiments of the present disclosure. In a case where the terminal is activated, the base station may acquire capability information from the terminal, so as to guide the terminal to report information. In order to support the base station in acquiring the capability information of the terminal, as shown in FIG. 5, the communication method provided in the embodiments of the present disclosure further includes: S501 to S502.

In S501: a terminal receives fourth information sent from a base station.

The fourth information may be used to query capability information of the terminal.

In one possible manner, the fourth information may include at least one of: a capability query indication, an access configuration, a resource configuration of a physical uplink control channel (PUCCH), and a hybrid automatic repeat request (HARQ) configuration. The capability query indication may be used to indicate querying of the capability information. The access configuration may be a relevant configuration parameter for the terminal to access the base station. The resource configuration of the PUCCH may include a resource indicator of the PUCCH. The HARQ configuration may include an HARQ feedback timing indicator.

In one possible manner, the fourth information may further include a cyclic prefix (CP) extension, used to eliminate inter-symbol interference caused by multipath propagation, etc.

In one possible manner, the fourth information may be carried in at least one of: predefined dedicated signaling for carrying the capability query indication, information related to a cell handover procedure, information related to a path switch procedure, context configuration release information, paging information, and position report information. The context configuration release information is information related to context configuration or release of the terminal.

In one possible manner, the base station may also carry the fourth information in downlink information such as a connection configuration, a reconfiguration, connection recovery, or capability inquiry information, for downlink transmission.

In S502: the terminal sends capability information to the base station.

In one possible manner, after receiving the fourth information sent from the base station, the terminal may send uplink information or a UE capability message carrying its own capability information, to the base station. Correspondingly, the base station may receive the capability information sent from the terminal.

The capability information of the terminal may include at least one of: a terminal type (such as the first type, the second type, or the third type), information for indicating whether a query function is supported, information for indicating whether a write function is supported, information for indicating whether parameter setting is supported, information for indicating whether a storage function is supported, information for indicating whether segmented transmission of data packets is supported, information for indicating whether a remote control capability is supported, information for indicating whether an analysis capability is provided, and information for indicating whether real-time monitoring is supported, etc.

In the above embodiments of the present disclosure, the terminal may report the capability information under the indication of the base station, so that the base station performs targeted network optimization, etc., according to the capability information reported by the terminal. For example, in a case where there are many terminals with weak performance, the base station may increase the strength and frequency of downlink signals, etc., so that the terminal implements relevant processing and performs information reporting based on energy carried by the downlink signals.

In an embodiment, in order to avoid the terminal sending a quality of experience (QoE) measurement report measured in a non-connected state to a non-home operator, it is considered to support the terminal in performing a public land mobile network (PLMN) check during QoE measurement. In this case, when the terminal performs QoE measurement in the non-connected state, the communication method provided in the embodiments of the present disclosure further includes: S601.

In S601: in a case where a reselected PLMN in a non-connected state is different from a registered PLMN, the terminal executes a first operation.

The first operation may include at least one of behaviors of: stopping QoE measurement for the registered PLMN; saving a QoE measurement report of the registered PLMN; triggering the terminal to enter a connected state and receiving QoE measurement configuration information; triggering the terminal to enter a connected state and receiving indication information for the terminal to continue measurement; executing QoE measurement corresponding to the reselected PLMN, based on a default QoE measurement configuration; overwriting a QoE measurement report corresponding to the registered PLMN with a QoE measurement report corresponding to the reselected PLMN; acquiring a new QoE measurement configuration, and executing QoE measurement corresponding to the reselected PLMN based on a new QoE measurement configuration.

In one possible manner, it is considered that the terminal can still perform quality of experience (QoE) measurement in the non-connected state to obtain a QoE measurement report, and may trigger a public land mobile network (PLMN) reselection process. In this case, a PLMN corresponding to a QoE measurement report measured by the terminal is the registered PLMN before reselection, and the registered PLMN and the reselected PLMN may belong to different operators. If the terminal sends the QoE measurement report to the reselected PLMN, it is prone to the problem that the QoE measurement report is reported to the non-home operator.

Therefore, in a case where the reselected PLMN in the non-connected state is different from the registered PLMN, the terminal may execute the first operation, so as to avoid the problem of erroneous reporting of the QoE measurement report. That is, in a case where the connected PLMN is not included within the area range, and the connected PLMN is different from the PLMN providing the QoE configuration, the terminal will not forward the QoE configuration and the QoE measurement report, and may release the QoE configuration and the QoE measurement report.

In one possible manner, the non-connected state may be a radio resource control (RRC) idle state or inactive state.

In an embodiment, considering that the terminal in the non-connected state may trigger multiple PLMN reselection processes, i.e., the terminal in the non-connected state may measure QoE measurement reports of a plurality of registered PLMNs. In order to facilitate the terminal in determining a QoE measurement report corresponding to the currently used PLMN that needs to be reported, when switching from the non-connected state to a connected state, the communication method provided in the embodiments of the present disclosure further includes: S701.

In S701: the terminal stores a QoE measurement report, and an identifier of a registered PLMN corresponding to the QoE measurement report.

In an implementable, after performing QoE measurement to obtain a QoE measurement report, the terminal may store the QoE measurement report, and store the identifier (i.e., ID) of the registered PLMN corresponding to the QoE measurement report. For example, the terminal may add the registered PLMN ID corresponding to the QoE measurement report, in a measurement report app layer message carrying the QoE measurement report. Based on this, the terminal may conveniently and accurately identify QoE measurement reports corresponding to different PLMNs.

Further, when the terminal switches from the non-connected state to the connected state, the terminal may determine the corresponding QoE measurement report for reporting, based on the ID of the PLMN used in the connected state.

In an embodiment, considering that the identifier of the PLMN is a complex string combination, and the performance of the terminal may be weak, making it difficult to process operations such as storing the identifier of the PLMN. In order to facilitate the terminal in storing the correspondence between the QoE measurement report and the PLMN, the communication method provided in the embodiments of the present disclosure further includes: S801.

In S801: the terminal stores a QoE measurement report, and identification information corresponding to an identifier of a registered PLMN.

In one possible manner, the identification information corresponding to the identifier of the registered PLMN may be a relatively simple string combination. For example, a combination of one English letter and two Arabic numerals, a combination of two English letters and two Arabic numerals, etc. Based on this, in a case of weak performance (such as less energy and/or fewer storage resources, etc.), when storing the QoE measurement report, the terminal may store the correspondence between the identifier of the registered PLMN corresponding to the QoE measurement report and the simple identification information, so as to facilitate subsequent identification and reporting.

In an embodiment, as shown in FIG. 6, it is a schematic flowchart of yet another communication method provided in the embodiments of the present disclosure. The method shown in FIG. 6 may be applied to the base station in the communication system shown in FIG. 1. As shown in FIG. 6, the communication method may include: S901 to S902.

In S901: a base station sends first information to a terminal.

The first information is used to indicate an operation command.

It should be understood that for an example implementation of S901, reference may be made to the description of the above S201, which is not repeated here.

In S902: the base station receives second information sent from the terminal.

The second information is used to indicate an execution result of the operation command.

It should be understood that for an example implementation of S902, reference may be made to the description of the above S202, which is not repeated here.

In an embodiment, as shown in FIG. 7, it is a schematic flowchart of yet another communication method provided in the embodiments of the present disclosure. When implementing the process in the above S901 to S902, as shown in FIG. 7, the communication method may include: S1001 to S1002.

In S1001: a base station sends first information to a terminal through a first relay node.

It should be understood that for an example implementation of S1001, reference may be made to the description of the above S301, which is not repeated here.

In S1002: the base station receives second information sent from the terminal via the first relay node.

It should be understood that for an example implementation of S1002, reference may be made to the description of the above S302, which is not repeated here.

In an embodiment, in order to implement a communication connection between a base station and a low-performance terminal in the ambient IoT, as shown in FIG. 8, it is a schematic flowchart of yet another communication method provided in the embodiments of the present disclosure. The communication method illustrated in FIG. 8 may activate a low-performance terminal by a base station, including: S1101 to S1102.

In S1101: a base station sends third information by broadcast.

The third information is used to activate a terminal.

It should be understood that for an example implementation of S1101, reference may be made to the description of the above S401, which is not repeated here.

In S1102: the base station receives access information sent from the terminal.

It should be understood that for an example implementation of S1102, reference may be made to the description of the above S402, which is not repeated here.

In an embodiment, in a case where the terminal is activated, the base station may acquire capability information of the terminal, so as to guide the terminal in reporting relevant information in the environment. In order to support the base station in acquiring capability information of the terminal, the communication method provided in the embodiments of the present disclosure may further include: S1201.

In S1201: the base station receives capability information of the terminal.

In one possible manner, a method for the base station receiving the capability information of the terminal may be receiving the capability information of the terminal sent from the terminal, or receiving the capability information of the terminal sent from an upper layer network element. Alternatively, the base station may also pre-store the capability information of the terminal, and receiving the capability information of the terminal may also be directly reading the pre-stored capability information of the terminal.

In an embodiment, as shown in FIG. 9, it is a schematic flowchart of yet another communication method provided in the embodiments of the present disclosure. FIG. 9 illustrates an example implementation where a base station acquires capability information of a terminal, including: S1301 to S1302.

In S1301: a base station sends fourth information to a terminal.

The fourth information is used to query capability information of the terminal.

It should be understood that for an example implementation of S1301, reference may be made to the description of the above S501, which is not repeated here.

In S1302: the base station receives capability information sent from the terminal.

It should be understood that for an example implementation of S1302, reference may be made to the description of the above S502, which is not repeated here.

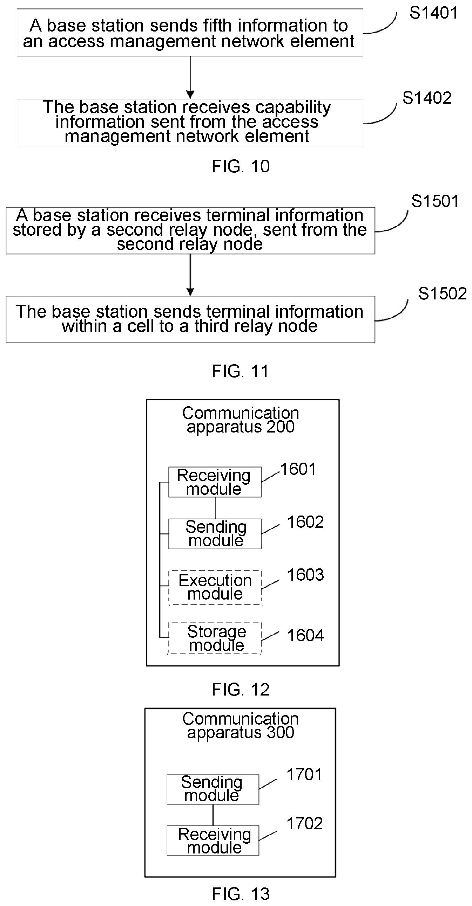

In an embodiment, as shown in FIG. 10, it is a schematic flowchart of yet another communication method provided in the embodiments of the present disclosure. FIG. 10 illustrates yet another example implementation where a base station acquires capability information of a terminal, including: S1401 to S1402.

In S1401: a base station sends fifth information to an access management network element.

The fifth information may be used to query the access management network element about capability information of a terminal.

In one possible manner, the fifth information may include at least one of: a capability query indication and terminal identification information. The terminal identification information may be a terminal ID, etc.

In one possible manner, the base station may send the fifth information to the access management network element via at least one of: predefined dedicated signaling for carrying the fifth information, information related to a next generation (NG) interface configuration, information related to a radio access network (RAN) configuration, information related to AMF configuration update, information related to overload, information related to handover, information related to a warning type, information related to an error type, etc. Correspondingly, the access management network element may receive the fifth information sent from the base station.

In one possible manner, the access management network element may be an access and mobility management function (AMF) network element.

In S1402: the base station receives capability information sent from the access management network element.

In one possible manner, the access management network element may be configured with a storage module. The storage module may be used to pre-store capability information of each terminal in the ambient IoT. Based on this, after receiving the fifth information sent from the base station, the access management network element may parse the fifth information to obtain the terminal identification information, and read corresponding capability information from the storage module based on the terminal identification information. Further, the access management network element may send the capability information of the terminal to the base station. Correspondingly, the base station may receive the capability information of the terminal sent from the access management network element, so as to guide the terminal in reporting information.

In one possible manner, the access management network element may send the capability information of the terminal to the base station via at least one of: predefined dedicated signaling for carrying the capability information of the terminal, information related to handover, information related to path switch, information related to terminal context configuration and release, paging related information, position related information, etc.

In the above embodiments of the present disclosure, the base station may acquire the capability information of the terminal from the access management network element. The access management network element assists the terminal in reporting the capability information, to avoid the problem that it is difficult for the terminal to report detailed capability information when its performance is weak, so as to support information interaction between the base station and the terminal.

In an embodiment, as shown in FIG. 11, it is a schematic flowchart of yet another communication method provided in the embodiments of the present disclosure. The communication method illustrated in FIG. 11 may include: S1501 to S1502.

In S1501: a base station receives terminal information stored by a second relay node, sent from the second relay node.

The second relay node is a relay node to be moved out of a cell. For example, the second relay node may be a UE, etc., near the terminal.

In one possible manner, in a case where the terminal is connected to the base station via the second relay node, the second relay node may store relevant information of the terminal. Based on this, when determining to move out of the cell under the base station, the second relay node may send the stored terminal information to the base station, so as to report the relevant information of the terminal to the base station. Correspondingly, the base station may receive the terminal information sent from the second relay node, and store the terminal information, so that the base station configures the terminal information of the terminal within the cell under the base station for a relay node that is newly accessed, enabling the relay node that is newly accessed to quickly acquire the terminal information.

In one possible manner, the second relay node may send the stored terminal information to the base station via at least one of: predefined indication information, a predefined media access control control element, predefined uplink control information, uplink assistance information, measurement report related information, response information of the UE, and uplink dedicated information, etc.

In one possible manner, the second relay node may be the same relay node as the first relay node, or may be a relay node different from the first relay node. In a case where the second relay node is a relay node different from the first relay node, the second relay node may be a relay node that newly moves into the cell under the base station after the first relay node moves out of the cell under the base station.

In S1502: the base station sends terminal information within the cell to a third relay node.

The third relay node is a relay node that newly moves into the cell.

In one possible manner, upon determining that the third relay node moves into the managed cell, the base station sends the terminal information within the cell to the third relay node. Correspondingly, the third relay node may receive the terminal information within the cell sent from the base station, and configure the terminal information. Subsequently, the base station may send relevant indication information to the terminal via the third relay node, so as to receive, via the third relay node, relevant information in the environment reported by the terminal.

In one possible manner, the base station may send the terminal information within the cell to the third relay node via at least one of: connection configuration information, reconfiguration information, connection recovery information, predefined unicast indication information, downlink dedicated information, a predefined media access control control element, and predefined downlink control information.

Based on this, in a process of relay node switching within the cell, the terminal information in the previous relay node (such as the second relay node) that move out of the cell may be configured to a next relay node (such as the third relay node) that newly moves into the cell, thereby conveniently configuring the terminal information for the relay node that is newly accessed, avoiding occupation of air interface resources caused by re-executing procedures such as acquisition and configuration of the terminal information, thus saving air interface resources.

It can be understood that, in order to implement the above functions, the terminal or base station in the communication system includes corresponding hardware structures and/or software modules for executing the respective functions. Those skilled in the art should easily realize that, in combination with the algorithm steps of the examples described in the embodiments of the present disclosure, the present disclosure may be implemented in a form of hardware or a combination of hardware and computer software. Whether a certain function is executed by hardware or computer software driving hardware depends on specific applications and design constraints of the technical solutions. Professional technicians may use different methods for each specific application to implement the described functions, but such an implementation should not be considered as beyond the scope of the present disclosure.

In the embodiments of the present disclosure, the primary gateway in the communication system may be divided into functional modules according to the above method embodiments. For example, each functional module may be divided corresponding to each function, or two or more functions may be integrated into a functional module. The above integrated module may be implemented in a form of hardware, or may be implemented in a form of software. It should be noted that the division of modules in the embodiments of the present disclosure is illustrative, and is only a logical function division. There may be other divisions in actual implementations. The following description takes an example of dividing each functional module corresponding to each function.

In a case where each functional module is divided corresponding to each function in a form of software, FIG. 12 illustrates a schematic structural diagram of a communication apparatus 200. The communication apparatus 200 may be applied to the terminal in the communication system in FIG. 1, and may be used to perform the communication method performed by the terminal in the above method embodiments. As shown in FIG. 12, the communication apparatus 200 may include: a receiving module 1601 and a sending module 1602.
receiving first information sent from a base station, where the first information is used to indicate an operation command; and
sending second information to the base station, where the second information is used to indicate an execution result of the operation command.

In a possible embodiment, the first information includes at least one of: a type of the operation command, terminal identification information, check information, and a sequence number; where the terminal identification information is used to indicate a terminal that executes the operation command.

In a possible embodiment, the type of the operation command includes at least one of: a read command, a query command, a write command, a parameter setting command, an inventory command, or a positioning command.

In a possible embodiment, the terminal identification information includes at least one of: a terminal type, group information, and a terminal identifier.

In a possible embodiment, the first information is carried in at least one of: broadcast information, unicast information, downlink dedicated information, system information, a media access control control element, downlink control information, or positioning information.

In a possible embodiment, the second information includes at least one of: the execution result, check information, a terminal identifier, and information for indicating whether segmented transmission is performed.

In a possible embodiment, the execution result includes: read-related information, query-related information, information for indicating successful writing, information for indicating successful setting, inventory-related information, and positioning-related information.

In a possible embodiment, the second information is carried in at least one of: a media access control control element, uplink control information, uplink assistance information, response information, a measurement report, and uplink dedicated information.

In a possible embodiment, the receiving module 1601 may be configured to: receive the first information sent from the base station via a first relay node; and
the sending module 1602 may be configured to: send the second information to the base station via the first relay node.

In a possible embodiment, the receiving module 1601 is further configured to receive third information broadcast by the base station, where the third information is used to activate the terminal.

In a possible embodiment, the third information includes at least one of: an operation command, a terminal type, a base station identifier, a cell identifier, a sequence number, check information, SSB related information, initial bandwidth information, a downlink channel configuration, and a random access parameter.

In a possible embodiment, the receiving module 1601 is further configured to receive fourth information sent from the base station, where the fourth information is used to query capability information of the terminal; and
the sending module 1602 is further configured to send the capability information to the base station.

In a possible embodiment, the capability information includes at least one of: a terminal type, information for indicating whether a query function is supported, information for indicating whether a write function is supported, information for indicating whether parameter setting is supported, information for indicating whether a storage function is supported, information for indicating whether segmented transmission of data packets is supported, information for indicating whether a remote control capability is supported, information for indicating whether an analysis capability is provided, and information for indicating whether real-time monitoring is supported.

In a possible embodiment, the fourth information includes at least one of: a capability query indication, an access configuration, a resource configuration of a physical uplink control channel, and an HARQ configuration.

In a possible embodiment, the communication apparatus 200 further includes: an execution module 1603.

The execution module 1603 is configured to: in a case where a reselected PLMN in a non-connected state of the terminal is different from a registered PLMN, executing at least one of behaviors of: stopping QoE measurement for the registered PLMN; saving a QoE measurement report of the registered PLMN; triggering the terminal to enter a connected state and receiving QoE measurement configuration information; triggering the terminal to enter a connected state and receiving indication information for the terminal to continue measurement; executing QoE measurement corresponding to the reselected PLMN, based on a default QoE measurement configuration; overwriting a QoE measurement report corresponding to the registered PLMN with a QoE measurement report corresponding to the reselected PLMN; or acquiring a new QoE measurement configuration, and executing QoE measurement corresponding to the reselected PLMN based on the new QoE measurement configuration.

In a possible embodiment, the communication apparatus 200 further includes: a storage module 1604.

The storage module 1604 is configured to store a QoE measurement report, and an identifier of a registered PLMN corresponding to the QoE measurement report.

In a possible embodiment, the storage module 1604 is further configured to store the QoE measurement report, and identification information corresponding to the identifier of the registered PLMN.

In a case where each functional module is divided corresponding to each function in a form of software, FIG. 13 illustrates a schematic structural diagram of a communication apparatus 300. The communication apparatus 300 may be applied to the base station in the communication system in FIG. 1, and may be used to perform the communication method performed by the base station in the above method embodiments. As shown in FIG. 13, the communication apparatus 300 may include: a sending module 1701 and a receiving module 1702.

The sending module 1701 is configured to send first information to a terminal, where the first information is used to indicate an operation command; and
the receiving module 1702 is configured to receive second information sent from the terminal, where the second information is used to indicate an execution result of the operation command.

In a possible embodiment, the sending module 1701 may be configured to: send the first information to the terminal via a first relay node; and
the receiving module 1702 may be configured to: receive the second information sent from the terminal via the first relay node.

In a possible embodiment, the sending module 1701 is further configured to send third information by broadcast, where the third information is used to activate the terminal.

In a possible embodiment, the receiving module 1702 is further configured to receive capability information of the terminal.

In a possible embodiment, the sending module 1701 may be configured to send fourth information to the terminal, where the fourth information is used to query the capability information of the terminal; the receiving module 1702 may be configured to receive the capability information sent from the terminal.

In a possible embodiment, the sending module 1701 may be configured to send fifth information to an access management network element, where the fifth information is used to query the access management network element about the capability information of the terminal; the receiving module 1702 may be configured to receive the capability information sent from the access management network element.

In a possible embodiment, the receiving module 1702 is further configured to receive terminal information stored by a second relay node, sent from the second relay node, where the second relay node is a relay node to be moved out of a cell.

In a possible embodiment, the sending module 1701 is further configured to send terminal information within a cell to a third relay node, where the third relay node is a relay node that newly moves into the cell.

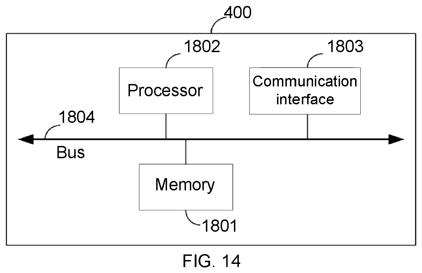

In a case where the functions of the above integrated modules are implemented in a form of hardware, the embodiments of the present disclosure provide another possible structure of the communication apparatus involved in the above embodiments. As shown in FIG. 14, the communication apparatus 400 may include: a processor 1802, and a bus 1804. In some embodiments, the communication apparatus 400 may further include a memory 1801; in some embodiments, the communication apparatus 400 may further include a communication interface 1803.

For example, a part or all of the functions of the modules such as the receiving module 1601 and the sending module 1602 included in the communication apparatus 200 in FIG. 12 above may also be implemented by the processor 1802.

For another example, a part or all of the functions of the modules such as the sending module 1701 and the receiving module 1702 included in the communication apparatus 300 in FIG. 13 above may also be implemented by the processor 1802.

The processor 1802 may implement or perform various exemplary logical blocks, modules, and circuits described in conjunction with the embodiments of the present disclosure. The processor 1802 may be a central processing unit, a general-purpose processor, a digital signal processor, an application-specific integrated circuit, a field programmable gate array or other programmable logic devices, a transistor logic device, a hardware component, or any combination thereof, which may implement or perform the various exemplary logical blocks, modules, and circuits described in conjunction with the embodiments of the present disclosure. The processor 1802 may also be a combination implementing computing functions, for example, a combination including one or more microprocessors, a combination of a DSP (Digital Signal Processor) and a microprocessor, etc.

The communication interface 1803 is configured to connect with other devices via a communication network. The communication network may be an Ethernet, a wireless access network, a wireless local area network (WLAN), etc.

The memory 1801 may be a read-only memory (ROM) or other types of static storage devices that may store static information and instructions, a random access memory (RAM) or other types of dynamic storage devices that may store information and instructions, may also be an electrically erasable programmable read-only memory (EEPROM), a magnetic disk storage medium or other magnetic storage devices, or any other medium that can be used to carry or store desired program codes in a form of instructions or data structures and can be accessed by a computer, but is not limited thereto.

As a possible implementation, the memory 1801 may exist independently of the processor 1802, and the memory 1801 may be connected to the processor 1802 via the bus 1804, for storing instructions or a program code. When the processor 1802 calls and executes the instructions or program code stored in the memory 1801, the communication method provided in the embodiments of the present disclosure may be implemented.

In another possible implementation, the memory 1801 may also be integrated with the processor 1802.

The bus 1804 may be an extended industry standard architecture (EISA) bus, etc. The bus 1804 may be classified into an address bus, a data bus, a control bus, etc. For ease of representation, only one thick line is used in FIG. 14, but it does not indicate that there is only one bus or one type of bus.

Some embodiments of the present disclosure provide a computer-readable storage medium (for example, a non-transitory computer-readable storage medium), in which computer program instructions are stored. When the computer program instructions are run on a computer, the computer executes the communication method described in any one of the above embodiments.

Exemplarily, the above computer-readable storage medium may include, but is not limited to: a magnetic storage device (e.g., hard disk, floppy disk, or magnetic tape, etc.), an optical disk (e.g., compact disk (CD), digital versatile disk (DVD), etc.), a smart card, and a flash memory device (e.g., erasable programmable read-only memory (EPROM), card, stick, or key drive, etc.).

Various computer-readable storage media described in the present disclosure may represent one or more devices and/or other machine-readable storage media for storing information.

The term "machine-readable storage medium" may include, but is not limited to, a wireless channel and various other media capable of storing, containing, and/or carrying instructions and/or data.

The embodiments of the present disclosure provide a computer program product containing instructions. When the computer program product is run on a computer, the computer executes the communication method described in any one of the above embodiments.

The above description is only specific implementations of the present disclosure, but the protection scope of the present disclosure is not limited thereto. Any change or replacement within the technical scope disclosed by the present disclosure should be covered within the protection scope of the present disclosure. Therefore, the protection scope of the present disclosure should be based on the protection scope of the claims.

## Claims

1. A communication method, applied to a terminal, wherein the method comprises:
receiving first information sent from a base station, wherein the first information is used to indicate an operation command; and
sending second information to the base station, wherein the second information is used to indicate an execution result of the operation command.

2. The method according to claim 1, wherein the first information comprises at least one of: a type of the operation command, terminal identification information, check information, and a sequence number; wherein the terminal identification information is used to indicate a terminal that executes the operation command.

3. The method according to claim 2, wherein the type of the operation command comprises at least one of: a read command, a query command, a write command, a parameter setting command, an inventory command, or a positioning command.

4. The method according to claim 2, wherein the terminal identification information comprises at least one of: a terminal type, group information, and a terminal identifier.

5. The method according to claim 1, wherein the first information is carried in at least one of: broadcast information, unicast information, downlink dedicated information, system information, a media access control control element, downlink control information, or positioning information.

6. The method according to claim 1, wherein the second information comprises at least one of: the execution result, check information, a terminal identifier, and information for indicating whether segmented transmission is performed.

7. The method according to claim 6, wherein the execution result comprises at least one of: read-related information, query-related information, information for indicating successful writing, information for indicating successful setting, inventory-related information, and positioning-related information.

8. The method according to claim 1, wherein the second information is carried in at least one of: a media access control control element, uplink control information, uplink assistance information, response information, a measurement report, and uplink dedicated information.

9. The method according to claim 1, wherein receiving the first information sent from the base station, comprises:
receiving the first information sent from the base station via a first relay node;
sending the second information to the base station, comprises:
sending the second information to the base station via the first relay node.

10. The method according to claim 1, further comprising:
receiving third information broadcast by the base station, wherein the third information is used to activate the terminal.

11. The method according to claim 10, wherein the third information comprises at least one of: an operation command, a terminal type, a base station identifier, a cell identifier, a sequence number, check information, synchronization signal and physical broadcast channel block, SSB, related information, initial bandwidth information, a downlink channel configuration, and a random access parameter.

12. The method according to claim 1, further comprising:
receiving fourth information sent from the base station, wherein the fourth information is used to query capability information of the terminal; and
sending the capability information to the base station.

13. The method according to claim 12, wherein the capability information comprises at least one of: a terminal type, information for indicating whether a query function is supported, information for indicating whether a write function is supported, information for indicating whether parameter setting is supported, information for indicating whether a storage function is supported, information for indicating whether segmented transmission of data packets is supported, information for indicating whether a remote control capability is supported, information for indicating whether an analysis capability is provided, and information for indicating whether real-time monitoring is supported.

14. The method according to claim 12, wherein the fourth information comprises at least one of: a capability query indication, an access configuration, a resource configuration of a physical uplink control channel, and a hybrid automatic repeat request, HARQ, configuration.

15. The method according to claim 1, further comprising:
in a case where a reselected public land mobile network, PLMN, in a non-connected state of the terminal is different from a registered PLMN, executing at least one of behaviors of:
stopping quality of experience, QoE, measurement for the registered PLMN;
saving a QoE measurement report of the registered PLMN;
triggering the terminal to enter a connected state and receiving QoE measurement configuration information;
triggering the terminal to enter a connected state and receiving indication information for the terminal to continue measurement;
executing QoE measurement corresponding to the reselected PLMN, based on a default QoE measurement configuration;
overwriting a QoE measurement report corresponding to the registered PLMN with a QoE measurement report corresponding to the reselected PLMN; or
acquiring a new QoE measurement configuration, and executing QoE measurement corresponding to the reselected PLMN based on the new QoE measurement configuration.

16. The method according to claim 1, further comprising:
storing a QoE measurement report, and an identifier of a registered PLMN corresponding to the QoE measurement report.

17. The method according to claim 16, further comprising:
storing the QoE measurement report, and identification information corresponding to the identifier of the registered PLMN.

18. A communication method, applied to a base station, wherein the method comprises:
sending first information to a terminal, wherein the first information is used to indicate an operation command; and
receiving second information sent from the terminal, wherein the second information is used to indicate an execution result of the operation command.

19. The method according to claim 18, wherein sending the first information to the terminal, comprises:
sending the first information to the terminal via a first relay node;
receiving the second information sent from the terminal, comprises:
receiving the second information sent from the terminal via the first relay node.

20. The method according to claim 18, further comprising:
sending third information by broadcast, wherein the third information is used to activate the terminal.

21. The method according to claim 18, further comprising:
receiving capability information of the terminal.

22. The method according to claim 21, wherein receiving the capability information of the terminal, comprises:
sending fourth information to the terminal, wherein the fourth information is used to query the capability information of the terminal; and
receiving the capability information sent from the terminal.

23. The method according to claim 21, wherein receiving the capability information of the terminal, comprises:
sending fifth information to an access management network element, wherein the fifth information is used to query the access management network element about the capability information of the terminal; and
receiving the capability information sent from the access management network element.

24. The method according to claim 18, further comprising:
receiving terminal information stored by a second relay node, sent from the second relay node, wherein the second relay node is a relay node to be moved out of a cell.

25. The method according to claim 18, further comprising:
sending terminal information within a cell to a third relay node, wherein the third relay node is a relay node that newly moves into the cell.

26. A communication apparatus, comprising: a memory and a processor; wherein the memory and the processor are coupled; the memory is configured to store instructions executable by the processor; and the processor, upon executing the instructions, performs the method according to any one of claims 1 to 17, or performs the method according to any one of claims 18 to 25.

27. A computer-readable storage medium, wherein computer instructions are stored on the computer-readable storage medium, and the computer instructions, upon running on a computer, enable the computer to perform the method according to any one of claims 1 to 17, or enable the computer to perform the computer to perform the method according to any one of claims 18 to 25.
